# EUROPEAN PATENT APPLICATION

(11) **EP 4 603 311 A1**
(43) Date of publication of application: **20.08.2025**
(21) Application number: 25152855.0
(22) Date of filing: 20.01.2025
(51) Int. Cl.: B60H 1/32, F25B 39/04

(54) **MICRO VAPOR CYCLE CONDENSER UNIT**

(30) Priority: 14.02.2024 US 202418441437
(71) Applicant: Honeywell International Inc., Charlotte, NC 28202 (US)
(72) Inventor: KOLDER, Mark Edmund, Charlotte, 28202 (US)
(74) Representative: Haseltine Lake Kempner LLP

(57) **Abstract**

A vapor cycle system includes a condenser unit that include a condenser (604) and a plurality of mounting features. The condenser unit includes a condenser, including an inlet configured to receive pressurized gas, and an outlet (616) configured to allow a flow of liquid out of the condenser. The plurality of mounting features are attached to the condenser unit and configured to allow the condenser unit to be mounted in a vehicle in a plurality of orientations with respect to gravity. The outlet (616) is positioned at a lowermost point of the condenser in each of the plurality of orientations. The vapor cycle system is configured to cool a thermal load in a vehicle.

## Description

### TECHNICAL FIELD

The present disclosure relates to systems and techniques for producing conditioned air for a vehicle cabin.

### BACKGROUND

A typical commercial transport aircraft provides conditioned air to a cabin of the aircraft over a variety of flight conditions. To supplement air losses and maintain cabin comfort, the aircraft draws in outside air and conditions the outside air for use in the cabin, such as by pressurizing the air using an air pressurization system (APS) and cooling the air using an environmental control system (ECS). As an example, a typical fresh air flow requirement for an Airbus A320 or a Boeing 737 size aircraft is approximately 1 kg per second. The condenser unit of the ECS must be mounted somewhere in the aircraft in a position that allows proper operation of the condenser unit.

### SUMMARY

In some examples, the disclosure describes a vapor cycle condenser unit that includes a plurality of mounting features that allow the condenser unit to be mounted in a vehicle (e.g., an aircraft) in a plurality of orientations with respect to gravity. In each of the plurality of orientations, the outlet of a condenser of the condenser unit may be positioned at a lowermost point of the condenser unit to allow unobstructed liquid flow out of the condenser.

In some examples a condenser unit includes: a condenser including: an inlet configured to receive pressurized gas; and an outlet configured to allow a flow of liquid out of the condenser; and a plurality of mounting features attached to the condenser unit and configured to allow the condenser unit to be mounted in a vehicle in a plurality of orientations with respect to gravity, wherein the outlet is positioned at a lowermost point of the condenser in each of the plurality of orientations.

In some examples, a vapor cycle system includes: a condenser unit including: a condenser including: an inlet configured to receive pressurized gas; and an outlet configured to allow a flow of liquid out of the condenser; and a plurality of mounting features attached to the condenser unit and configured to allow the condenser unit to be mounted in a vehicle in a plurality of orientations with respect to gravity, wherein the outlet is positioned at a lowermost point of the condenser in each of the plurality of orientations; and wherein the vapor cycle system is configured to cool a thermal load in a vehicle.

The details of one or more examples are set forth in the accompanying drawings and the description below. Other features, objects, and advantages will be apparent from the description and drawings, and from the claims.

### BRIEF DESCRIPTION OF THE FIGURES

FIG. 1 is a diagram illustrating an example system for cooling a thermal load.
FIG. 2 is a diagram illustrating an example condenser unit.
FIG. 3A is an isometric view of an example condenser unit, including a condenser outlet.
FIG. 3B is another isometric view of the example condenser unit of FIG. 3A, including a condenser inlet.
FIG. 4A is a side profile view of select components of an example condenser unit, including a first set of mounting features.
FIG. 4B is another side profile view of the example condenser unit of FIG. 4A, including a second set of mounting features.
FIG. 5 is a side profile view of an example frame for a condensing unit, including a plurality of mounting features.
FIG. 6A is a diagram of an example condenser unit and condenser outlet with reference to a set of axes.
FIG. 6B is a diagram of the example condenser unit and outlet of FIG. 6A rotated 90 degrees around a z-axis.
FIG. 6C is a diagram of the example condenser unit and outlet of FIG. 6A rotated 90 degrees around a y-axis.
FIG. 6D is a diagram of the example condenser unit and outlet of FIG. 6A rotated 180 degrees around an x-axis.

### DETAILED DESCRIPTION

Systems and methods are disclosed for mounting a condenser unit of a vapor cycle cooling system (VCCS) in a vehicle, such as an aircraft. Due to space restrictions in a vehicle, particularly in aircraft, condenser units typically have only a single mounting orientation within the vehicle, and hence must often be custom made for the specific vehicle in which the condenser unit will be mounted. In accordance with examples of this disclosure, a condenser unit may include a plurality of mounting features configured to allow the condenser unit to be mounted in the vehicle in a plurality of orientations with respect to gravity. In this way the systems of the current disclosure may provide a single condenser unit capable of installation into a plurality of different vehicle types.

According to principles of the disclosure, a VCCS of a vehicle may be configured to cool a thermal load for the vehicle. For example, the thermal load may include cabin air for cooling the cabin of an aircraft. The VCCS may generally include a compressor, a condenser, and an evaporator through which a cooling medium (i.e., fluid) flows. The compressor may compress and pressurize the system fluid, aiding flow within the system and supplying the condenser with a relatively high temperature, gaseous form of the system fluid. The condenser transfers heat away from the system fluid (e.g., to the surrounding air or other fluid). This heat exchange causes the system fluid to undergo a phase change from a gas to a liquid. The evaporator may receive the system fluid after the condenser. Inside the evaporator, the liquid system fluid expands through a valve or an orifice, reducing its pressure and causing it to rapidly evaporate. This phase change from liquid to gas requires heat energy, which is extracted from the surrounding thermal load (e.g., air or other substance being cooled). After extracting heat energy from the thermal load in the evaporator, the system fluid may return to the compressor for another cycle. In some examples, the evaporator may include a fan to push air across the evaporator.

A condenser unit in a VCCS may include, at a minimum, the condenser of the VCCS. As described above, the inlet of the condenser may receive the system fluid in a gaseous form, and the system fluid may leave the outlet of the condenser as a liquid. Because of the weight of the system fluid as a liquid, the condenser according to the present disclosure may be oriented such that the condenser outlet, when the condenser is mounted in a vehicle, is substantially at a lowermost point of the condenser with respect to gravity. Furthermore, a condenser unit of the present disclosure may include a plurality of mounting features configured to allow the condenser unit to be mounted in a plurality of orientations with respect to gravity, such that the outlet of the condenser is positioned at a lowermost point of the condenser in each of the plurality of orientations.

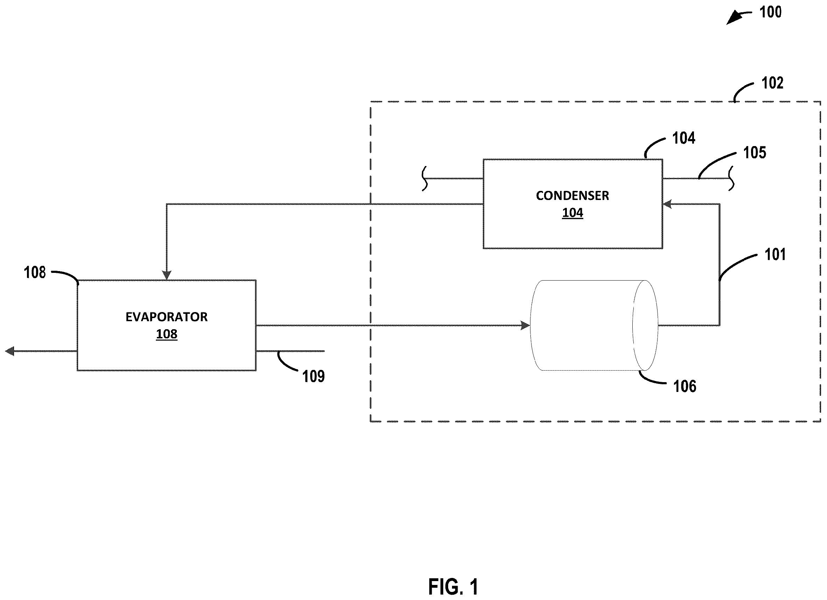

FIG. 1 is a diagram illustrating an example vapor cooling system 100 for cooling a thermal load 109. System 100 includes compressor 106, condenser 104, and evaporator 108. In the example of FIG. 1, condenser 104 and compressor 106 make up condenser unit 102. System 100 may be mounted in an aircraft or other vehicle to cool thermal load 109. In some examples, system 100 may include other components not featured in FIG. 1, for example a filter drier, one or more expansion valves, and/or a flash heat exchanger between condenser 104 and evaporator 108. Furthermore, in some examples system 100 may include a plurality of pressure sensors, temperature sensors, valves, and wiring throughout system 100. System 100 may also include one or more control units configured to control components of system 100, for example a motor controller to control a motor of compressor 106.

System 100 may be configured to cool thermal load 109. For example, thermal load 109 may represent a cabin air supply line filled with air to be cooled to provide cool air to a cabin of an aircraft. The cabin of an aircraft may be configured to house people, cargo, and the like. The cabin may be fluidically coupled to the cabin air supply line. To maintain adequate conditions within the internal environment of the cabin, such as for personal comfort or required by law or industry standard, the environmental control system (ECS) of the aircraft may be configured to control ambient conditions of the cabin. For example, the ECS may be configured to control a pressure, temperature, humidity, air flow rate, or other ambient conditions of the cabin at various aircraft conditions, such as ground operation, passenger loading, take-off, cruising, descent, and landing. System 100 may be a part of the aircraft ECS configured control the temperature of cabin air according to one or more setpoints for ambient conditions of the cabin. For example, system 100 may cool the cabin air supply line to maintain a target range of pressures, temperatures, and/or humidity of the cabin.

The one or more fluid connections 101 of system 100 may be filled with refrigerant that undergoes a vapor cycle as the refrigerant progresses through system 100 in order to cool thermal load 109, as depicted by the lines and arrows between compressor 106, condenser 104, and evaporator 108. For example, compressor 106 may be configured to pressurize the refrigerant, causing the refrigerant to travel through system 100. Condenser 104 may be configured to cool the refrigerant. One or more expansion devices may be configured to control a flow rate of the refrigerant through system 100. Evaporator 108 may be configured to cool thermal load 109, e.g., cool a cabin air line to supply an aircraft cabin with cool air.

In some examples, thermal load 109 may represent an air line to supply any portion of the vehicle with cool air. For example, thermal load 109 may represent an air line to supply the first class portion of the cabin with cool air, the cockpit with cool air, the crew quarters with cold air, or any other portion of the aircraft with cool air. In some examples, thermal load 109 may represent a cooling line that transfers cooling fluid to avionics or other electronics of the aircraft.

Condenser 104 may be fluidically coupled to, and in series with, compressor system 106 such that the refrigerant flows from compressor 106 to an inlet of condenser 104 and through condenser 104. Condenser 104 may be fluidically coupled to cooling source 105 to provide heat transfer from the refrigerant to cooling source 105. Condenser 104 may be configured to receive vapor refrigerant from compressor 106, condense the vapor refrigerant, and discharge refrigerant. In some examples, an outlet of condenser 104 may be in fluid communication with evaporator 108. In some examples, refrigerant may flow from the outlet of condenser 104 through a series of other components of system 100 before reaching evaporator 108, e.g., a filter drier, one or more expansion devices, and/or a flash heat exchanger. In some examples, condenser 104 is cooled by environmental air, such as ram air flow.

The example of FIG. 1 is meant to be exemplary and should not be considered limiting as to the components of system 100. In some examples, system 100 may have more components than shown in FIG. 1. For example, system 100 may include one or more expansion devices, flash heat exchangers, pressure sensors, temperature sensors, and/or other components known in the art for operation of a vapor cycle cooling system.

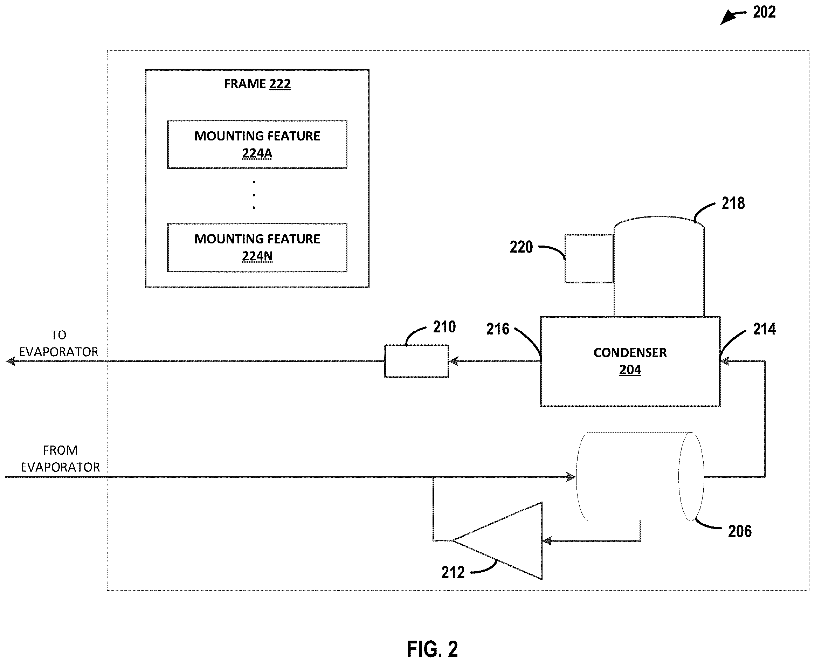

FIG. 2 is a diagram illustrating example condenser unit 202. In the example of FIG. 2, condenser unit 202 includes condenser 204, compressor 206, filter drier 210, and surge valve 212. In the example of FIG. 2, condenser 204 includes inlet 214, outlet 216, fan 218, and fan controller 220. Condenser 204, compressor 206, and condenser unit 202 may be substantially similar to condenser 104, compressor 106, and condenser unit 102 of FIG. 1, respectively.

The flow of refrigerant through condenser unit 202 is depicted in FIG. 2 coming into condenser unit 202 from an evaporator of a VCCS that includes condenser unit 202 and leaving condenser unit 202 to the evaporator. While refrigerant is described herein as traveling from condenser unit 202 to the evaporator and traveling from the evaporator to condenser unit 202, it may be understood that the refrigerant passes through one or more other components of the VCCS between the evaporator and condenser unit 202 when leaving condenser unit 202 and/or when leaving the evaporator. Condenser unit 202 also includes a rigid frame 222 with a plurality of mounting features 224A-224N.

Condenser 204 may include inlet 214 configured to receive pressurized gas. For example, inlet 214 may be in fluid communication with compressor 206 of the VCCS. Compressor 206 may compress and pressurize the refrigerant, increasing the temperature and pressure of the refrigerant to supply inlet 214 with vaporized refrigerant. Condenser 204 may also include outlet 216 configured to allow a flow of liquid refrigerant out of condenser 204. For example, condenser 204 may include condenser fan 218 configured to promote heat transfer away from the refrigerant in condenser 204 and into a cooling source (e.g., air or other fluid). In this way, the vaporized refrigerant may condense into a liquid as it flows through condenser 204.

Outlet 216 of condenser 204 may be in fluid communication with filter drier 210 such that the pressure in the VCCS generated by compressor 206 drives the refrigerant from outlet 216 of condenser 204 towards and through filter drier 210. Filter drier 210 may be in series with, and fluidically couple to, condenser 204 such that the refrigerant travels from condenser 204 through condenser outlet 216 to filter drier 210. Filter drier 210 may be configured to absorb moisture and trap impurities in the refrigerant. For example, filter drier 210 may receive refrigerant from condenser 204 and remove particles (e.g., dirt, metal, chips) from the refrigerant, as well as remove moisture from the refrigerant. Refrigerant may travel from filter drier 210 to an evaporator of a VCCS.

Although not depicted in FIG. 2, frame 222 may be attached to one or more components of condenser unit 202 in order to hold each of the components in place with respect to one another. Frame 222 may support the weight of each of the components of condenser unit 202 when condenser unit 202 is mounted in a vehicle. Condenser unit 202 may mount to the vehicle using one or more of mounting feature 224A-224N (together, mounting features 224). Mounting features 224 may be attached to and/or incorporated into the structure of frame 222. Mounting features 224 may be configured to allow condenser unit 202 to be mounted in the vehicle in a plurality of orientations with respect to gravity. In each of the orientations, outlet 216 of condenser 204 may be positioned substantially at the lowermost point of condenser 204.

Condenser 204, including fan 218 and fan controller 220, as well as compressor 206 may make up a substantial portion of the weight of condenser unit 202. Therefore, frame 222 may attach to each of these components of condenser unit 202. In addition, mounting features 224 may be positioned in close proximity to one or more of these components in order to provide support for condenser unit 202 when condenser unit 202 is mounted in the vehicle.

Surge valve 212 may be in fluid communication with compressor 206. Surge valve 212 may protect compressor 206 from potential damage during a "surge." Surge is a dynamic instability that can occur when the flow rate of refrigerant through the compressor drops below a certain minimum value, typically due to a sudden decrease in the cooling load or other operational changes. Surge valve 212 may open when it detects a surge condition and divert a portion of the fluid from compressor 206 back to the compressor inlet. Surge valve 212 may operate most effectively when it is oriented in a certain position with respect to gravity. For example, surge valve 212 may operate most effectively when surge valve 212 is either upright, or tilted ninety degrees with respect to gravity.

Because condenser 204 may operate most effectively when oriented in a particular manner with respect to gravity, in some examples, an orientation of surge valve 212 of condenser unit 202 may be aligned with an orientation of condenser 204 of condenser unit 202. For example, condenser 204 may operate most effectively when outlet 216 of condenser 204 is positioned at a lowermost point of condenser 204. In some examples, condenser 204 may define an axis spanning from the side of condenser 204 that includes outlet 216 through a length of condenser 206. The axis defined by condenser 204 may define a "down" direction in the direction of outlet 216 along the length of condenser 204, and an "up" direction in the opposite direction along the axis. In some examples, surge valve 212 may define an axis spanning from the bottom of surge valve 212 to the top of surge valve 212 along a length of surge valve 212. The axis defined by surge valve 212 may define a "down" direction in the direction of the bottom of surge valve 212 along the length of surge valve 212, and an "up" direction in the opposite direction along the axis. The axis defined by condenser 204 may be parallel to the axis defined by surge valve 212, wherein the "down" direction of both axes are oriented in the same direction. For example, the bottom of surge valve 212 may point the same direction on the axis of surge valve 212 that outlet 216 points on the axis of condenser 204. In some examples, the bottom of surge valve 212 may be oriented ninety degrees off from outlet 216 of condenser 204.

The components of condenser unit 202 in FIG. 2 are provided for example, and should not be considered limiting. In some examples, condenser unit 202 includes more or fewer components than shown in FIG. 2, so long as condenser unit 202 includes a condenser (e.g., condenser 204).

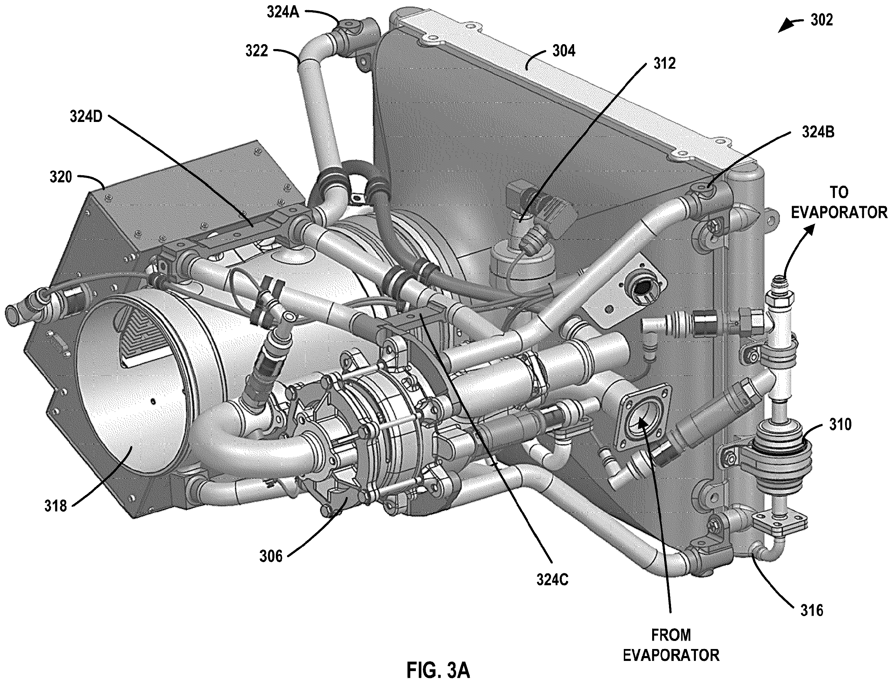

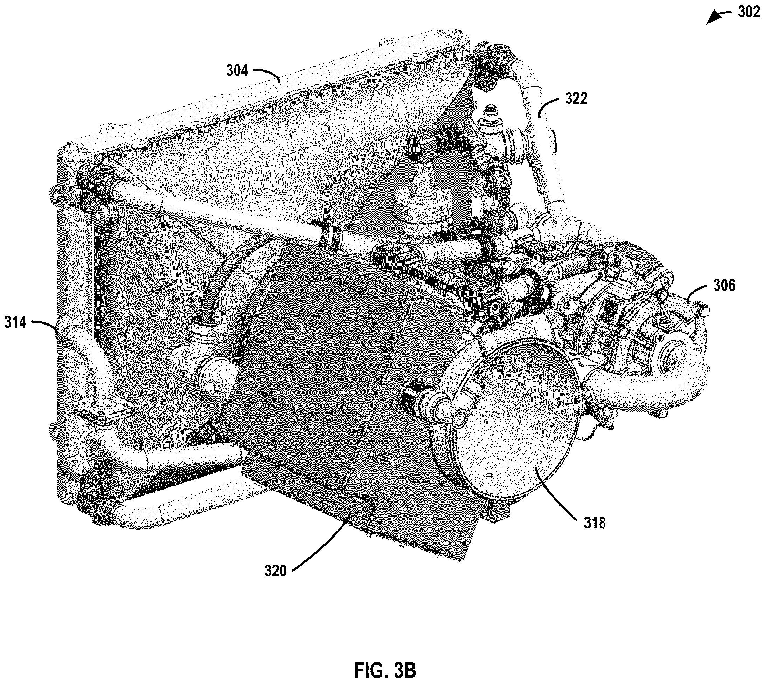

FIG. 3A is an isometric view of example condenser unit 302, including condenser outlet 316. Condenser unit 302 includes condenser 304, compressor 306, surge valve 312, filter drier 310, and frame 322. Condenser 304 includes outlet 316, fan 318, and fan controller 320. Frame 322 includes a plurality of mounting features 324A-324D (together mounting features 324). Features of FIG. 3A and 3B may be substantially similar to their like-named counterparts in FIG. 2.

Refrigerant may flow into condenser unit 302 from an evaporator and enter compressor 306. Compressor 306 may pressurize the refrigerant to provide pressurized gas to condenser 304. An inlet of condenser 304 may receive the pressurized gas. Fan 318 may cool the refrigerant passing through condenser 304. For example, fan 318 may push cool air across fins or tubes of condenser 304 to transfer heat away from refrigerant inside condenser 304 and into the air. The operation of fan 318 (e.g., timing, speed, etc.) may be controlled by fan controller 320. Condenser 304 may condense the refrigerant to a predominantly liquid form before the refrigerant is received by filter drier 310.

Refrigerant may flow to an evaporator of a VCCS that includes condenser unit 302 after passing through filter drier 310. While refrigerant is described herein as traveling from condenser unit 302 to the evaporator and traveling from the evaporator to condenser unit 302, it may be understood that the refrigerant passes through one or more other components of the VCCS between the evaporator and condenser unit 302 when leaving condenser unit 302 and/or when leaving the evaporator.

Frame 322 may attach to one or more components of condenser unit 302. For example, frame 322 may be attached to one or more of fan 318, compressor 306, and a main body of condenser 304. In some examples, frame 322 may include multiple attachment points to one component of condenser unit 302. For example, frame 322 may include four attachment points to a main body of condenser 304, four attachment points to fan 318, and four attachment points to compressor 306. In some examples, frame 322 may attach to piping and/or wiring of condenser unit 302. For example, frame 322 may include one or more attachment mechanisms to hold wiring in place with respect to frame 322. Frame 322 may be substantially rigid and configured to stabilize condenser unit 302. For example frame 322 may hold the components of condenser unit 302 in place with respect to one another. In some examples, frame 322 is made primarily of aluminum rods or hollow aluminum tubing. The hollow aluminum tubing of frame 322 may reduce the overall weight of condenser unit 302 compared to an example in which frame 322 is made of a heavier metal or not hollow.

Condenser unit 302 may mount to the vehicle using one or more of mounting features 324. Mounting features 324 may be rigid and aid frame 322 in stabilizing elements of condenser unit 302. Mounting features 324 may be attached to and/or integrated into the structure of frame 322. For example, mounting feature 324D may define an elongated bar. The elongated bar may define a length and may be attached to frame 322 at each end of the length. The elongated bar may aid in the structural stability of frame 322 by resisting movement of frame 322. For example, forces that might otherwise cause/encourage frame 322 to bend or fracture may be mitigated by the elongated bar. The elongated bar may resist tensile and compressive forces experienced across the length of the elongated bar. The elongated bar of mounting feature 324D may include a bolt hole through a width of the elongated bar. The elongated bar of mounting feature 324D may also include one or more flat surfaces on either side of the bolt hole. The bolt hole and one or more flat surfaces may allow attachment of a clamp and bolt to mounting feature 324D, wherein the clamp and bolt are part of a system used to mount condenser unit 302 to a vehicle.

In some examples, frame 322 is composed of one or more pipes, and one or more of mounting features 324 includes a bolt hole through a portion of a pipe of the one or more pipes. For example, mounting feature 324A may be attached to frame 322 around a circumference of the pipe of frame 322 at the location where mounting feature 324A is attached to frame 322. A bolt hole may extend through mounting feature 324A and through a diameter defined by the pipe of frame 322 at the location where mounting feature 324A is located.

In some examples, mounting feature 324Ais attached to frame 322. For example, mounting feature 324A may include an interior defining an inner diameter substantially equal to, or slightly larger than an external diameter defined by a pipe of frame 322 at the location where mounting feature 324A is attached to frame 322, wherein the pipe of frame 322 at that location is inserted into the interior of mounting feature 324A. In some examples, mounting features 324 are separately formed and welded onto frame 322. In some example, mounting features 324 may be formed into their respective shapes from machined stock, then welded onto frame 322.

Condenser 304, fan 318, fan controller 320, and compressor 306 may make up a substantial portion of the weight of condenser unit 302. In some examples frame 322 may attach to one or more of condenser 304, fan 318, fan controller 320, and compressor 306. In some examples, frame 322 may attach to each of condenser 304, fan 318, fan controller 320, and compressor 306. In some examples, mounting features 324 may be positioned in close proximity to one or more of condenser 304, fan 318, fan controller 320, and compressor 306 in order to provide support for condenser unit 302 when condenser unit 302 is mounted in the vehicle. As shown in the example of FIG. 3A, mounting features 324A and 324B are located on frame 322 adjacent to a main body of condenser 304. In some examples, at least one of mounting features 324 is adjacent each of condenser 304, fan 318, fan controller 320, and compressor 306, as in the example of FIG. 3A. In the example of FIG. 3A, mounting feature 324D is located on frame 322 adjacent to fan 318 and fan controller 320. In the example of FIG. 3A, mounting feature 324C is located on frame 322 adjacent to compressor 306.

In some examples, one or more of mounting features 324 may be incorporated into an attachment feature that attaches frame 322 to one or more of condenser 304, fan 318, fan controller 320, and compressor 306. For example, mounting feature 324B of FIG. 3A may include multiple bolt holes. One bolt hole of mounting feature 324B may be used to attach frame 322 to condenser 304, while another bolt hole of mounting feature 324B may be used to mount frame 322 inside a vehicle. In the example of mounting feature 324D of FIG. 3A, fan 318 may attach to mounting feature 324D and frame 322 may attach to mounting feature 324D. In this way frame 322 may attach to fan 318 via mounting feature 324D.

As described above, surge valve 312 may operate most effectively when it is oriented in a certain position with respect to gravity. In the example of FIG. 3A, gravity may be pulling downward with respect to the figure, such that surge valve 312 is upright as shown. The top of surge valve 312 may correspond to the side of surge valve 312 located closer to the top of FIG. 3A, while the bottom of surge valve 312 may correspond to the side of surge valve 312 located furthest away from the top of FIG. 3A. Surge valve 312 may operate most effectively when it is oriented upright, and when surge valve 312 is oriented no more than ninety degrees away from upright.

Condenser 304 may operate most effectively when oriented in a particular position with respect to gravity, as described above. The orientation of condenser 304 may be described with reference to outlet 316. For example, outlet 316 may be located on the bottom of condenser. In the example of FIG. 3A, condenser 304 is oriented with the bottom of condenser 304 facing the right-hand side of the figure. In some examples, condenser 304 may be considered "upright" when the bottom of condenser faces down (i.e., towards gravity). In some examples, outlet 316 may be positioned on a corner of condenser 304, such that outlet 316 is at the lowermost point of condenser 304 when the bottom of condenser 304 faces both down and when the bottom of condenser 304 faces to the right as shown in FIG. 3A.

Because both condenser 304 and surge valve 312 operate most effectively when oriented upright or ninety degrees off of upright, the orientation of surge valve 312 and condenser 304 in condenser unit 302 may be configured such that neither is ever more than ninety degrees away from upright. For example, in the example of FIG. 3A, surge valve 312 is oriented upright, and condenser 304 is oriented ninety degrees away from upright. In some examples, an orientation of surge valve 312 may be aligned with an orientation of condenser 304.

FIG. 3B is another isometric view of example condenser unit 302 of FIG. 3A, including condenser inlet 314. Condenser unit 302 includes condenser 304, compressor 306, and frame 322. Condenser 304 includes inlet 314, fan 318, and fan controller 320. Frame 322 includes a plurality of mounting features. Inlet 314 of condenser 304 may receive pressurized gas refrigerant from compressor 306.

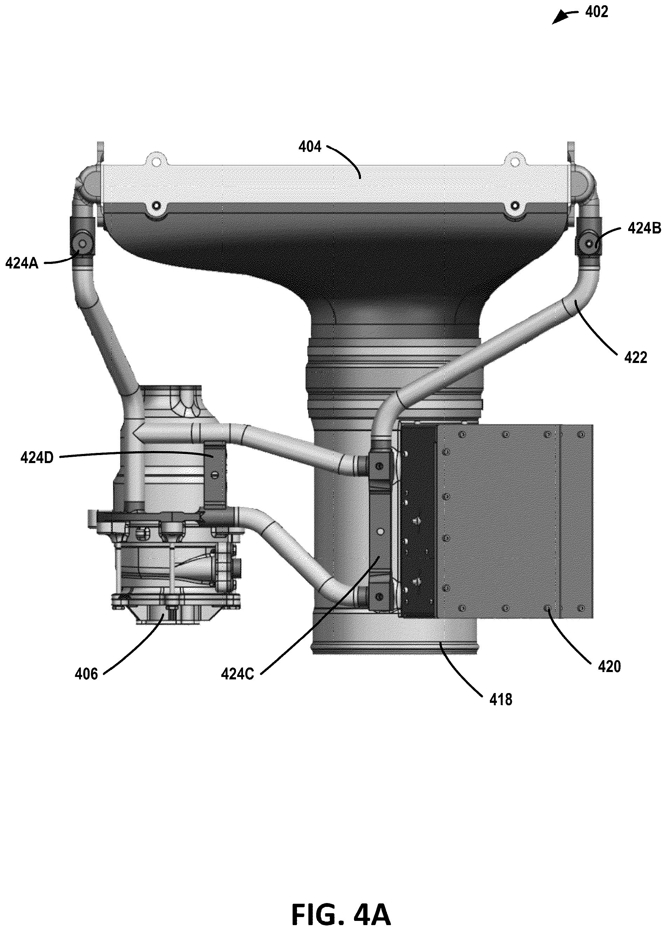

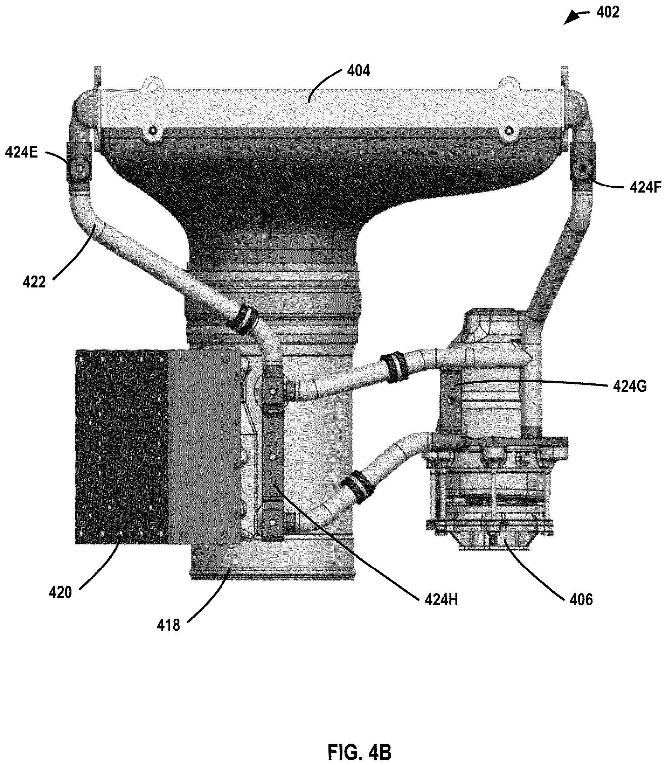

FIG. 4A is a side profile view of select components of an example condenser unit 402, including a first set of mounting features 424A-424D. FIG. 4B is another side profile view of the example condenser unit 402 of FIG. 4A, including a second set of mounting features 424E-H. Condenser unit 402 includes condenser 404, compressor 406, and frame 422. Condenser 404 includes fan 418, and fan controller 420. Features of FIGS. 4A and 4B may be substantially similar to their like-named counterparts in FIGS. 1-3B.

Frame 422 includes a first set of mounting features 424A-424D and a second set of mounting features 424E-424H (together, mounting features 424). Mounting features 424 of condenser unit 402 may be configured to allow condenser unit 402 to be mounted in the vehicle in a plurality of orientations with respect to gravity. In each of the orientations, an outlet of condenser 404 may be positioned substantially at the lowermost point of condenser 404. It may be understood that condenser outlet 616, having non-zero dimensions in 3D space, cannot be located precisely at the lowermost point of condenser 604. FIGS. 4A and 4B may depict opposite sides of condenser unit 402, such that first set of mounting features 424A-424D and second set of mounting features 424E-424H may be positioned on opposite sides of condenser unit 402. By having multiple sets of mounting features 424 on different sides of condenser unit 402, the condenser unit 402 may be mounted in more arrangements and in more vehicles than previous condenser units. For example, condenser unit 402 may be configured to be mounted to a vehicle by one of first set of mounting features 424A-424D or second set of mounting features 424E-424H.

In examples where condenser unit 402 includes a first set of mounting features on one side of condenser unit 402 (e.g., mounting features 424A-424D) and a second set of mounting features on an opposite side of condenser unit 402 (e.g., mounting features 424E-424H), the sets of mounting features 424 may be symmetric across a plane bisecting condenser unit 402. For example, mounting features 424A-424D of FIG. 4A are symmetric with mounting features 424E-424H of FIG. 4B on opposing sides of condenser unit 402. In some examples, frame 422 may also be symmetric across a plane bisecting condenser unit 402. In some examples, frame 422 may be symmetric across the same bisecting plane across which the sets of mounting features 424 are symmetric. Symmetry of one or more of mounting features 424 and/or frame 422 may allow for more efficient manufacturing of frame 422 and/or mounting features 424.

In some examples, the sets of mounting features 424 may not all be symmetric across a plane bisecting condenser unit 402. Any number of mounting features 424 from a first set may be symmetric or not symmetric with mounting features 424 from a second set. In some examples, none of the mounting features 424 of either set may be symmetric with mounting features from the opposing set. In some examples, one or more mounting features of a first set (e.g., mounting features 424A-424D) may be symmetric with one or more mounting features of the second set (e.g., mounting features 424E-424H). For example, mounting feature 424Amay be symmetric with mounting feature 424F and mounting feature 424B may be symmetric with mounting feature 424E, but mounting feature 424C may not be symmetric with mounting feature 424H and mounting feature 4524D may not be symmetric with mounting feature 424G. By having multiple sets of mounting features 424 on different sides of condenser unit 402, where the sets are not symmetric with one another, condenser unit 402 may be mounted in more arrangements and in more vehicles than previous condenser units.

Although each set of mounting features 424 depicted in FIGS. 4A and 4B include four mounting features 424, in some examples a set of mounting features 424 may include more or fewer than four mounting features 424. For example a first set of mounting features 424 may include three mounting features and a second set of mounting features 424 may include five mounting features. In some examples, both a first and second set of mounting features 424 may include 6 mounting features.

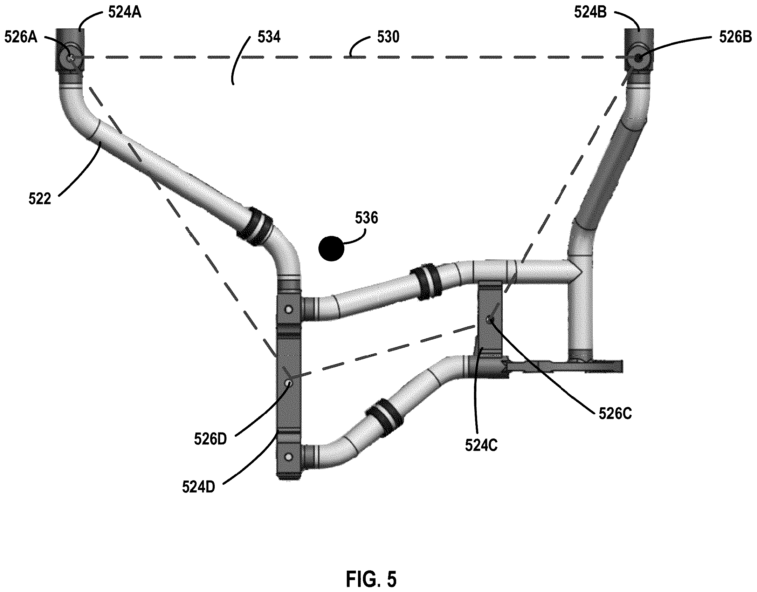

FIG. 5 is a side profile view of an example frame 522 for a condensing unit, including a plurality of mounting features 524. Frame 522 and mounting features 524 may be substantially similar to the frames and mounting features described in previous figures (e.g., FIGS. 3A-4B).

The condenser unit that includes frame 522 may define a side profile. For example, FIGS. 4A and 4B depict opposite side profiles of condenser unit 402. The location of each mounting feature of mounting features 524 may, when projected onto a plane parallel to the side profile, define a corner of polygon 530 on the plane. As shown in FIG. 5A, the center of the bolt holes used for mounting frame 522 to a vehicle are projected onto a plane to form corners 526A-526D of polygon 530. A center of gravity of the condenser unit may be projected onto the plane as well. The projection 536 of the center of gravity may be located on the plane within area 534 of polygon 530. In this manner, the mounting features may provide more stable mounting of the condenser unit than if the projection of the center of gravity were not located within polygon 530.

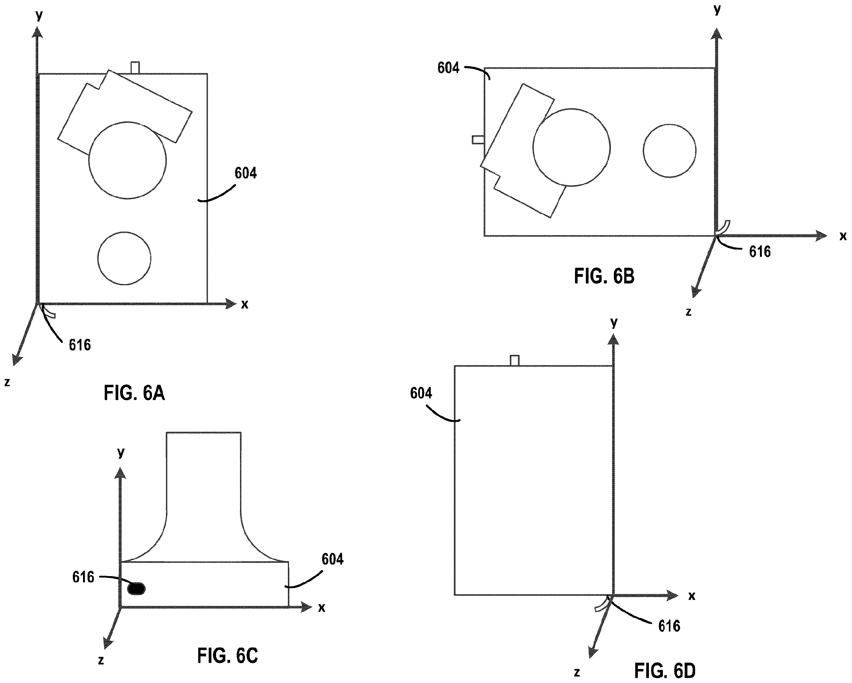

FIG. 6A is a diagram of an example condenser 604 and condenser outlet 616 with reference to a set of axes. Condenser 602 may define an x-axis, a y-axis, and a z-axis. The x-axis may be defined along a bottom side of condenser 604 when looking at FIG. 6A. The y-axis may be defined along a left-hand side of condenser 604 when looking at FIG. 6A. The z-axis may be defined coming out of the page when looking at FIG. 6A. Condenser outlet 616 may be located substantially at the origin of each of the x- axis, the y- axis, and the z-axis. For example, an origin of each of the x-axis, the y-axis, and the z-axis may be located at the corner of condenser 604 where condenser outlet 616 is located. It may be understood that condenser outlet 616, having non-zero dimensions in 3D space, cannot be located precisely at the corner of condenser 604 defining the origin.

The condenser unit that includes condenser 604 may be mounted in a vehicle in a plurality of orientations with respect to gravity. In the examples of FIGS. 6A-6D, gravity may apply a force from the bottom of the figures. For example, a positive y-direction may be defined away from the source of gravity. The plurality of mounting positions may include all positions of the condenser unit as condenser 602 pivots at least up to 90 degrees around any of the x- axis, the y- axis, and the z-axis. In each of the plurality of orientations, condenser outlet 616 may be positioned at a lowermost point of condenser 604 with respect to gravity.

For example, FIG. 6B is a diagram of example condenser 604 and condenser outlet 616 of FIG. 6A rotated 90 degrees around a z-axis. FIG. 6C is a diagram of example condenser 604 and condenser outlet 616 of FIG. 6A rotated 90 degrees around the y-axis.

In some examples, the plurality of mounting positions may include all positions of the condenser unit as condenser 602 pivots more than 90 degrees around certain axes. For example, the plurality of mounting positions, wherein condenser outlet 616 is positioned at a lowermost point of condenser 604 with respect to gravity, may include all positions of the condenser unit as condenser 602 (as shown in FIG. 6A) pivots up to and beyond 360 degrees around the y-axis. FIG. 6D is a diagram of example condenser 604 and condenser outlet 616 of FIG. 6A rotated 180 degrees around the x-axis.

The plurality of mounting positions may include any degree of rotation, or combined degrees of rotation, about the x-axis, y-axis, and/or z-axis, where condenser outlet 616 remains at a lowermost position of condenser 604. For example, a mounting position of the plurality of mounting positions may include a combined 45-degree rotation around the z-axis in a negative x direction and a 45-degree rotation around the x-axis in a negative z direction. In some examples, a mounting position may include all positions of the condenser unit as condenser 602 pivots up to 90 degrees around the z-axis in a negative x direction and up to and beyond 360 degrees around the y-axis in either direction.

Select examples of the present disclosure include, but are not limited to, the following examples.

Example 1: A vapor cycle cooling system, including: a condenser unit including: a condenser including: an inlet configured to receive pressurized gas; and an outlet configured to allow a flow of liquid out of the condenser; and a plurality of mounting features attached to the condenser unit and configured to allow the condenser unit to be mounted in a vehicle in a plurality of orientations with respect to gravity, wherein the outlet is positioned at a lowermost point of the condenser in each of the plurality of orientations; and wherein the vapor cycle system is configured to cool a heat load in a vehicle.

Example 2. The vapor cycle system of example 1, wherein the plurality of mounting features includes a first set of mounting features on a first side of the vapor cycle system and a second set of mounting features on a second side of the vapor cycle system, wherein the second side is a different side than the first side.

Example 3. The vapor cycle system of example 2, wherein the condenser is configured to be mounted to the vehicle by one of the first or second set of mounting features.

Example 4. The vapor cycle system of any of examples 1-3, wherein the condenser unit defines a side profile, wherein each mounting feature of the plurality of mounting features, when projected onto a plane parallel to the side profile, defines a corner of a polygon on the plane, and wherein a projection of a center of gravity of the condenser unit on the plane is located on the plane within an area of the polygon.

Example 5. The vapor cycle system of any of examples 1-4, wherein the condenser unit defines an x- axis, a y- axis, and a z-axis, wherein a positive y-direction is defined away from a source of gravity, wherein the outlet of the condenser is located substantially at the origin of each of the x- axis, the y- axis, and the z-axis, and wherein the plurality of mounting positions include all positions of the condenser unit as the condenser unit pivots at least up to 90 degrees around any of the x- axis, the y- axis, and the z-axis.

Example 6. The vapor cycle system of any of examples 1-5, wherein the plurality of mounting features are integrated into a rigid frame of the condenser unit.

Example 7. The vapor cycle system of any of examples 1-6, wherein the condenser unit further includes: a compressor configured to pressurize a fluid in the vapor cycle system to provide the pressurized gas to the condenser; and a condenser fan configured to cool the fluid passing through the condenser, wherein at least one of the plurality of mounting features is adjacent each of the compressor, the condenser fan, and the condenser.

Example 8. The vapor cycle system of example 7, wherein the condenser unit further includes a rigid frame configured to stabilize the condenser unit, and wherein the plurality of mounting features includes one or more mounting features incorporated into an attachment feature that attaches the rigid frame to one or more of the compressor, the condenser fan, and the condenser.

Example 9. The vapor cycle system of any of examples 7-8, wherein the condenser unit further includes a surge valve in fluid communication with the compressor, wherein an orientation of the surge valve is aligned with an orientation of the condenser.

Example 10. The vapor cycle system of any of examples 1-9, wherein the plurality of mounting features includes one or more elongated bars and a bolt hole through the elongated bar, wherein the elongated bar is further configured to stabilize a rigid frame of the condenser unit.

Example 11. The vapor cycle system of any of examples 1-10, wherein the condenser unit further includes a rigid frame configured to stabilize the condenser unit, wherein the rigid frame includes one or more pipes defining one or more diameters, and wherein the plurality of mounting features includes one or more bolt holes through a diameter of the one or more diameters defined by the one or more pipes of the rigid frame.

Example 12. The vapor cycle system of any of examples 1-11, further including: an evaporator in fluid communication with the condenser unit, and in fluid communication with a thermal load, wherein the evaporator is configured to cool the thermal load through energy transfer from the thermal load to a fluid in the vapor cycle system.

Example 13. A condenser unit including: a condenser including:

an inlet configured to receive pressurized gas; and an outlet configured to allow a flow of liquid out of the condenser; and a plurality of mounting features attached to the condenser unit and configured to allow the condenser unit to be mounted in a vehicle in a plurality of orientations with respect to gravity, wherein the outlet is positioned at a lowermost point of the condenser in each of the plurality of orientations.

Example 14. The condenser unit of example 13, wherein the plurality of mounting features a first set of mounting features on a first side of the condenser unit and a second set of mounting features on a second side of the condenser unit.

Example 15. The condenser unit of example 14, wherein the condenser is configured to be mounted to the vehicle by one of the first or second set of mounting features.

Example 16. The condenser unit of any of examples 13-15, wherein the condenser unit defines a side profile, wherein each mounting feature of the plurality of mounting features, when projected onto a plane parallel to the side profile, defines a corner of a polygon on the plane, and wherein a projection of a center of gravity of the condenser unit on the plane is located on the plane within an area of the polygon.

Example 17. The condenser unit of any of examples 13-16, wherein the condenser unit defines an x- axis, a y- axis, and a z-axis, and wherein the outlet of the condenser is located substantially at the origin of each of the x- axis, the y- axis, and the z-axis, and wherein the plurality of mounting positions include all positions of the condenser unit as the condenser unit pivots at least up to 90 degrees around any of the x- axis, the y- axis, and the z-axis.

Example 18. The condenser unit of any of examples 13-17, wherein the plurality of mounting features are integrated into a rigid frame of the condenser unit.

Example 19. The condenser unit of any of examples 13-18, wherein the condenser unit further includes: a compressor configured to pressurize a fluid to provide the pressurized gas to the condenser; and a condenser fan configured to cool the fluid passing through the condenser, wherein at least one of the plurality of mounting features is adjacent each of the compressor, the condenser fan, and the condenser.

Example 20. The condenser unit of example 19, wherein the condenser unit further includes a rigid frame configured to stabilize the condenser unit, and wherein the plurality of mounting features includes one or more mounting features incorporated into an attachment feature that attaches the rigid frame to one or more of the compressor, the condenser fan, and the condenser.

Various examples have been described. These and other examples are within the scope of the following claims.

## Claims

1. A vapor cycle system comprising:
a condenser unit comprising:
a condenser comprising:
an inlet configured to receive pressurized gas; and
an outlet configured to allow a flow of liquid out of the condenser; and
a plurality of mounting features attached to the condenser unit and configured to allow the condenser unit to be mounted in a vehicle in a plurality of orientations with respect to gravity, wherein the outlet is positioned at a lowermost point of the condenser in each of the plurality of orientations; and wherein the vapor cycle system is configured to cool a thermal load in a vehicle.

2. The vapor cycle system of claim 1, wherein the plurality of mounting features comprises a first set of mounting features on a first side of the vapor cycle system and a second set of mounting features on a second side of the vapor cycle system, wherein the second side is a different side than the first side.

3. The vapor cycle system of claim 2, wherein the condenser is configured to be mounted to the vehicle by one of the first or second set of mounting features.

4. The vapor cycle system of any of claims 1-3,
wherein the condenser unit defines a side profile,
wherein each mounting feature of the plurality of mounting features, when projected onto a plane parallel to the side profile, defines a corner of a polygon on the plane, and
wherein a projection of a center of gravity of the condenser unit on the plane is located on the plane within an area of the polygon.

5. The vapor cycle system of any of claims 1-4, wherein the condenser unit defines an x- axis, a y- axis, and a z-axis, wherein a positive y-direction is defined away from a source of gravity, wherein the outlet of the condenser is located substantially at the origin of each of the x- axis, the y- axis, and the z-axis, and wherein the plurality of mounting positions include all positions of the condenser unit as the condenser unit pivots at least up to 90 degrees around any of the x- axis, the y-axis, and the z-axis.

6. The vapor cycle system of any of claims 1-5, wherein the plurality of mounting features are integrated into a rigid frame of the condenser unit.

7. The vapor cycle system of any of claims 1-6, wherein the condenser unit further comprises:
a compressor configured to pressurize a fluid in the vapor cycle system to provide the pressurized gas to the condenser; and
a condenser fan configured to cool the fluid passing through the condenser,
wherein at least one of the plurality of mounting features is adjacent each of the compressor, the condenser fan, and the condenser.

8. The vapor cycle system of claim 7,
wherein the condenser unit further comprises a rigid frame configured to stabilize the condenser unit, and
wherein the plurality of mounting features comprises one or more mounting features incorporated into an attachment feature that attaches the rigid frame to one or more of the compressor, the condenser fan, and the condenser.

9. The vapor cycle system of claim 7, wherein the condenser unit further comprises a surge valve in fluid communication with the compressor, wherein an orientation of the surge valve is aligned with an orientation of the condenser.

10. The vapor cycle system of any of claims 1-9, wherein the plurality of mounting features comprises one or more elongated bars and a bolt hole through the elongated bar, wherein the elongated bar is further configured to stabilize a rigid frame of the condenser unit.

11. The vapor cycle system of any of claims 1-10,
wherein the condenser unit further comprises a rigid frame configured to stabilize the condenser unit,
wherein the rigid frame comprises one or more pipes defining one or more diameters, and
wherein the plurality of mounting features comprises one or more bolt holes through a diameter of the one or more diameters defined by the one or more pipes of the rigid frame.

12. The vapor cycle system of any of claims 1-11, further comprising:
an evaporator in fluid communication with the condenser unit, and in fluid communication with a thermal load, wherein the evaporator is configured to cool the thermal load through energy transfer from the thermal load to a fluid in the vapor cycle system.

13. A condenser unit comprising:
a condenser comprising:
an inlet configured to receive pressurized gas; and
an outlet configured to allow a flow of liquid out of the condenser; and
a plurality of mounting features attached to the condenser unit and configured to allow the condenser unit to be mounted in a vehicle in a plurality of orientations with respect to gravity, wherein the outlet is positioned at a lowermost point of the condenser in each of the plurality of orientations.

14. The condenser unit of claim 13,
wherein the condenser unit defines a side profile,
wherein each mounting feature of the plurality of mounting features, when projected onto a plane parallel to the side profile, defines a corner of a polygon on the plane, and
wherein a projection of a center of gravity of the condenser unit on the plane is located on the plane within an area of the polygon.

15. The condenser unit of any of claims 13 and 14, wherein the condenser unit defines an x- axis, a y- axis, and a z-axis, and wherein the outlet of the condenser is located substantially at the origin of each of the x- axis, the y- axis, and the z-axis, and wherein the plurality of mounting positions include all positions of the condenser unit as the condenser unit pivots at least up to 90 degrees around any of the x- axis, the y-axis, and the z-axis.
